# EUROPÄISCHE PATENTSCHRIFT

(11) **EP 0 925 640 B1**
(45) Veröffentlichungstag und Bekanntmachung des Hinweises auf die Patenterteilung: **31.01.2001**
(21) Anmeldenummer: 97944865.1
(22) Anmeldetag: 09.09.1997
(51) Int. Cl.: H02P 6/16, H02P 6/20

(54) **VERFAHREN ZUM STEUERN VON BÜRSTENLOSEN ELEKTROMOTOREN**
BRUSHLESS ELECTROMOTOR CONTROL METHOD
PROCEDE DE COMMANDE POUR MOTEURS ELECTRIQUES SANS BALAIS

(30) Priorität: 12.09.1996 DE 19637161
(43) Veröffentlichungstag der Anmeldung: 30.06.1999
(73) Patentinhaber: Quick Rotan Electromotoren GmbH, 67655 Kaiserslautern (DE)
(72) Erfinder: HOSAGASI, Sevki, D-64291 Darmstadt (DE); KILIAN, Michael, D-64354 Reinheim (DE)
(74) Vertreter: Säger, Manfred, Dipl.-Ing.
(86) Internationale Anmeldenummer: EP9704938
(87) Internationale Veröffentlichungsnummer: WO9811661

(56) Entgegenhaltungen:
- EP-A- 0 670 627
- US-A- 5 327 059
- US-A- 5 518 373

## Beschreibung

Die Erfindung betrifft ein Verfahren zum Steuern von bürstenlosen Elektromotoren, insbesondere bürstenlosen Gleichstrommotoren mit einem Stator und einer zumindest Dreispulenpaare aufweisenden Drehfeldwicklung, mit einem Rotor und mit Permanentmagneten, deren Anzahl von Polpaaren jener der Drehfeldwicklung entspricht.

Ein solches Verfahren ist bekannt (DE-38 19 064). Bei nach bekannten Verfahren arbeitende Elektromotoren kann das Drehfeld wie üblich durch drei sinusförmige Ströme, die gegeneinander um 120° phasenverschoben ist, erzeugen. In diesem Falle wird der Motor wie ein Synchronmotor arbeiten. Ein einfacherer Betrieb dieser Elektromotoren wird dadurch erreicht, daß die Spulen paarweise an bestimmten Winkelstellungen des Rotors umgeschaltet werden. Die Spulenpaare werden nacheinander hierbei so bestromt, daß über den Winkel in Laufrichtung des Elektromotors im Motor immer das maximale Drehmoment auf den Rotor entsteht. Die Umschaltung der Spulenpaare müssen bei dieser Betriebsart in Abhängigkeit von der Lage des Rotors vorgenommen werden. Berücksichtigt man bei der Umschaltung überdies die Geschwindigkeit des Rotors, so bringt dies bei höheren Drehzahlen Vorteile (DE-38 19 064). Die Rotorlage kann hierbei entweder mit Hilfe eines Lagegebers in Form von drei Hall-Sensoren oder von drei Lichtschranken bestimmt werden. Für die Geschwindigkeits- und/oder Lageregelung ist ferner noch ein zweiter Geber erforderlich, der entweder auf der Basis eines Inkrementalgebers oder Resolvers basiert. Die Geschwindigkeitsinformation wird dann aus den Informationen des Inkrementalgebers oder Resolvers errechnet.

Ein Verfahren für den Anlauf einer Synchronmaschine ist aus dem EP-A-670 627 bekannt.

Der Erfindung liegt die Aufgabe zugrunde, ein gattungsgemäßes Verfahren zum Steuern von solchen bürstenlosen Elektromotoren, insbesondere bürstenlosen Gleichstrommotoren vorzuschlagen, die keines aufwendigen Lagegebers bedürfen.

Diese Aufgabe wird durch den Gegenstand des Hauptanspruches gelöst.

Hiernach wird zunächst eine während einer Orientierungsphase durchgeführte Lagebestimmung des Rotors des Elektromotors durchgeführt. Dies geschieht dadurch, daß alle der drei Spulenpaare nacheinanderr impulsartig bestromt werden, wobei sich der Rotor mit jedem Stromimpuls aus seiner Anfangsposition ein kurzes Stück drehen kann. Nach jedem Stromimpuls in einem Spulenpaar wird der zurückgelegte Winkel sowie die Drehrichtung gemessen und gespeichert und danach der Rotor wieder in seine Anfangsposition gefahren. Hierdurch wird eine eindeutige Bestimmung der Lage des Rotors ohne eine zu große Lageänderung erreicht, indem die Spulenpaare impulsartig nur für eine kurze Zeit, nämlich einigen Millisekunden vom Strom durchflossen werden. Die Höhe des Stromes wird so gewählt, daß sich der Rotor unter den günstigen Umständen, d.h. im Bereich des Momentenmaximums um den erlaubten Bereich drehen kann. Diese Vorgehensweise ist zwar in vielen Bereichen der Industrie nicht erlaubt, da sich der Rotor in der Orientierungsphase in der bezüglich der normalen Drehrichtung in entgegengesetzter Richtung drehen kann. Der Nähindustrie wird jedoch ein Zurückdrehen in einem kleinen, wenige Winkelgrade nicht übersteigenden Bereich jedoch akzeptiert. In der Orientierungsphase findet man die Lage des Rotors bei drei Spulenpaaren im Bereich von 60° elektrisch; man findet aber nicht die optimalen Umschaltpunkte, weil man die aktuelle Lage des Rotors innerhalb dieses Bereiches nicht genau kennt. Unterstellt man die aktuelle Lage des Rotors als in der Mitte des Schaltbereichs, wird maximal ein Kommutierungsfehler von 30° elektrisch zu unterstellen sein. Abgesehen davon, daß dieser Fehler normalerweise durch einen an sich bekannten Geschwindigkeitsregler kompensiert werden kann, wird - um diesen vor möglichen Übersteuerungen zu schützen und damit ein Stehenbleiben des Elektromotors zu verhindern - dieser bis zum Erreichen der Synchronmarke im Schrittmotorbetrieb als zweiter Steuerungsschritt gefahren.

Hierbei wird das zugehörige Spulenpaar für eine Zeitlang mit Strom versorgt. Nach Ablauf dieser Zeit wird das nächste Spulenpaar für die gleiche Zeit eingeschaltet, usw. Die Zeit wird so gewählt, daß der Motor mit der minimalen Drehzahl läuft. Da die minimale Drehzahl in der Nähindustrie in der Regel über 100 RPM liegt, entstehen im Motor keine ruckartigen Bewegungen. Bei niedrigeren Drehzahlen wird die Bewegung des Elektromotors bei diesem Schrittmotorbetrieb nicht gleichmäßig sein, da die Schrittzahl zu gering ist (bei zweipoligen Elektromotoren sechs Schritte, bei vierpoligen Elektromotoren zwölf Schritte und bei sechspoligen Elektromotoren 18 Schritte).

Nach Erreichen der Synchronmarke des Inkrementalgebers kann die absolute Lage des Rotors ermittelt werden. Damit werden die Schaltpunkte der Spulenpaare im laufenden Betrieb anhand der von dem Inkrementalgeber ausgegebenen elektrischen Impulse gewonnen. Aus diesem Grunde kann der Schrittmotorbetrieb verlassen und der Elektromotor in den normalen Betrieb umgeschaltet werden.

Mit diesem Verfahren wird bei einem auf der Welle fest angeordneten Inkrementalgeber ein Signal erzeugt, welches in fester räumlicher Zuordnung zu den Permanentmagneten steht. Aufgrund dieser Beziehung können dann durch Zählen der Inkremente die Schaltpunkte ermittelt werden, weil die Synchronmarke des Imkrementalgebers eben in fester Relation zu der Lage der Permanentmagneten steht.

Weitere zweckmäßige Ausgestaltungen und Weiterbildungen der Erfindung sind in dem Anspruch 2 gekennzeichnet.

## Patentansprüche

1. Verfahren zum Steuern von bürstenlosen Elektromotoren, insbesondere bürstenlosen Gleichstrommotoren, mit einem Stator mit einer zumindest drei Spulenpaaren aufweisenden Drehfeldwicklung, mit einem Rotor mit Permanentmagneten, deren Anzahl von Polpaaren jener der Spulenpaare entspricht, und mit einem in Abhängigkeit von der Drehung des Rotors eine Vielzahl von elektrischen Impulsen abgebenden, auf der Welle des Rotors angeordneten Inkrementalgebers, der mit Bezug auf die Welle eine Synchronmarke aufweist, wobei zunächst eine während einer Orientierungsphase durchgeführte Lagebestimmung des Rotors durchgeführt, danach der Elektromotor bis zum Erreichen der Synchronmarke im Schrittmotorbetrieb gefahren und erst dann der Elektromotor auf normalen Betrieb umgeschaltet wird, dadurch gekennzeichnet, daß bei der Orientierungsphase ein erstes Spulenpaar impulsartig bestromt und der Winkel anhand der elektrischen Impulse des Inkrementalgebers sowie die Drehrichtung des Rotors bezüglich seiner Anfangsposition gemessen sowie gespeichert werden, wonach der Rotor wieder in seine Anfangsposition gefahren wird, und daß die vorstehend bezeichneten Schritte für die übrigen Spulenpaare durchgeführt werden.

2. Verfahren nach Anspruch 1, dadurch gekennzeichnet, daß durch die Auswertung der Lageabweichung und deren Richtung (durch den Stromimpulse in den Spulen) ein Spulenpaar zum Starten so ausgewählt wird, daß der Motor durch den Strom in diesem Spulenpaar in die gewünschte Richtung anläuft.

## Claims

1. A method of controlling brushless electric motors, in particular brushless dc motors, with a stator having a rotating field winding which has at least three pairs of coils, a rotor having permanent magnets, the number of pairs of poles of which corresponds to that of the pairs of coils, and an incremental generator which is arranged on the shaft of the rotor and which outputs a plurality of electrical pulses in dependence on the rotary movement of the rotor and which has a synchronous mark with respect to the shaft, wherein firstly an operation for determining the position of the rotor which is effected during an orientation phase is carried out, thereafter the electric motor is operated in a stepping motor mode until the synchronous mark is reached and only then is the electric motor switched over to normal mode, characterised in that in the orientation phase a first pair of coils is supplied with current in pulse mode and the angle is measured with respect to its initial position on the basis of the electrical pulses of the incremental generator and the direction of rotation of the rotor and stored, whereupon the rotor is moved again into its initial position, and that the above-mentioned steps are executed for the other pairs of coils.

2. A method according to claim 1 characterised in that by evaluation of the deviation in position and the direction thereof (by the current pulses in the coils), a pair of coils is so selected for starting that the motor starts in the desired direction due to the current in that pair of coils.

## Revendications

1. Procédé pour commander des moteurs électriques sans balais, en particulier des moteurs à courant continu sans balais qui comprennent un stator comportant un enroulement de champ à au moins trois paires de bobines, un rotor comportant des aimants permanents dont le nombre de paires de pôles correspond à celui des paires de bobines, et un émetteur incrémental monté sur l'arbre du rotor, qui émet une pluralité d'impulsions électriques en fonction de la rotation du rotor et qui présente un repère de synchronisation relatif à l'arbre, dans lequel s'effectue initialement une détermination de la position du rotor, laquelle est exécutée pendant une phase d'orientation, après quoi le moteur électrique est mis en marche dans le mode moteur pas à pas jusqu'à ce qu'il ait atteint le repère de synchronisation et ce n'est qu'à ce moment que le moteur électrique est commuté sur la marche normale, **CARACTERISE** en ce que, dans la phase d'orientation, une première paire de bobines est alimentée par impulsions et tant l'angle, celui-ci sur la base des impulsions électriques de l'émetteur incrémental, que le sens de rotation du rotor par rapport à sa position initiale, sont mesurés et mémorisés, après quoi le rotor est remis dans sa position de départ et en ce que les phases opératoires désignées ci-dessus sont exécutées pour les autres paires de bobines.

2. Procédé selon la revendication 1, **caractérisé** en ce qu'une paire de bobines est sélectionnée pour le démarrage, sur la base de l'écart de position et de son sens (par des impulsions de courant dans les bobines), de telle manière que le moteur démarre dans le sens souhaité sous l'effet du courant envoyé dans cette paire de bobines.
